## Europäisches Patentamt

## European Patent Office

## Office européen des brevets

(19)

(11) Publication number: **0 256 767**
**B1**

(12)

# EUROPEAN PATENT SPECIFICATION

(45) Date of publication of the patent specification:
**25.07.90**

(51) Int. Cl.⁵: **B65H 75/18**

(21) Application number: **87306926.4**

(22) Date of filing: **05.08.87**

(54) Tape reel assembly.

(30) Priority: **06.08.86 US 893698**

(43) Date of publication of application:
**24.02.88 Bulletin 88/8**

(45) Publication of the grant of the patent:
**25.07.90 Bulletin 90/30**

(84) Designated Contracting States:
**BE CH DE FR GB IT LI NL SE**

(56) References cited:
**DE-B- 2 252 024**
**US-A- 2 494 612**
**US-A- 3 642 223**

(73) Proprietor: **Advantek Inc., 6500 Carlson Drive, Eden Prairie Minnesota 55344(US)**

(72) Inventor: **Chenoweth, Dean B., 6500 Carlson Drive, Eden Prairie Minnesota 55344(US)**

(74) Representative: **SERJEANTS, 25, The Crescent King Street, Leicester, LE1 6RX(GB)**

## Description

### Field of Invention

The invention is directed to tape and film storage structures. The storage structures are reels and drums having central hubs and circular side members for storing a ribbon of flexible sheet material such as tape and film.

### Background of Invention

Tapes, films, and other elongated sheet members are commonly stored on reels. The reels have a central hub attached to outwardly directed circular side walls. One end of the tape is attached to the central hub so that when the reel is rotated, the tape is wound on the reel. Reels having a central hub and outwardly directed circular side walls have been made out of metal, paper, and plastics materials. The central hubs of adjacent plastics reel halves have been heat sealed together to form a unitary reel. Adhesives have also been used to bond reel halves together. Low cost disposable reels have been made with a central plastics foam core and circular side members of paper. Adhesive has been used to secure the paper side members to opposie sides of the core. The paper tends to pick up dust and dirt and absorbs moisture. Completed reels have been made from thermoplastics with injection moulding procedures. The resulting entire moulded plastics reel is a one piece structure having a central hub and a pair of outwardly directed circular side members. The plastics moulded reels are costly to manufacture and require separate moulds for each reel size. The prior art reels for tapes, films, and the like are completed or assembled at the manufacturing plant. They are bulky and require considerable space for shipment and storage. Common reel parts cannot be interchanged to make reels having different sizes.

US 2494612 discloses a metal motion picture film reel which can be separated into two parts for removal of the film therefrom by a twist-and-pull action. The twisting moves lugs to the ends of keyhold slots from which they can be withdrawn to divide the reel into its component halves. A plunger is spring-loaded normally to span the two halves to prevent that relative rotation. The reel assembly is expensive to manufacture, requires separate male and female reel halves, and could not feasibly be made from plastics material except by an injection moulding process involving highly specialized moulds and followed by a specialized post-assembly operation to fit the spring-loaded plunger.

No prior art proposal provides a reel assembly which permits a range of reel widths to be assembled from a limited number of preformed reel parts which can if desired be nested together for storage purposes nor a reel assembly which can be assembled from parts made by vacuum-forming thermoplastics material.

### Summary of Invention

The invention provides a reel assembly for a ribbon of flexible sheet material comprising first and second reel sections each having an abutment wall which on assembly is maintained in face-to-face contact with the abutment wall of the other reel section, wherein each abutment is provided with ear means a face of which can be caused to pass behind a corresponding face of the ear means of the other abutment wall by relative rotational movement between the reel sections to hold the reel sections together, and each abutment wall is further provided with locking means which interengage to prevent reverse rotational movement and disengagement of the reel sections. The reel sections may be nested together prior to assembly to provide efficient and compact storage and shipment. Different selections from three reel sections having different hub widths may be used to make six different sized reel assemblies. The use of only three reel sections to make a plurality of reel assemblies reduces the amount of inventory as well as the cost of manufacturing the reel assemblies.

The reel assemblies are made of compatible reel sections that are interlocked together. Each reel section preferably has a circular side wall surrounding a central hub. The abutment wall is formed on the hub and is axially spaced or offset from the plane of the side wall. Each abutment wall preferably has an identical array of interlocking ear means and locking means. The ear means on adjacent abutment walls of the pairs of reel sections that make up the reel assembly slide one behind the other on relative rotation of the reel sections to interengage each other and bias the abutment walls of the adjacent reel sections into surface engagement with each other. The locking means prevent reverse rotation, which would allow the interengaging ear means to disengage.

The reel assembly of a preferred embodiment of the invention accommodates an elongated ribbon of flexible sheet material, such as laminated sheet material packaging a plurality of parts, electrical components, and the like. The reel assembly has first and second reel sections that can be interlocked together by rotating one relative to the other. Each reel section has a central hub with an abutment wall laterally spaced from a generally circular side wall. The abutment wall has a plurality of flexible ears that extend in a first circumferential direction. Each ear has a first, proximal, generally flat section that projects into the slot and a second section joined to the first section. A second, distal section is inclined outwardly from the plane of the abutment wall. On rotation, the ears of the first reel section project through the slots in the abutment wall of the second reel section. In a similar manner, the ears of the second reel section project through the slots in the abutment wall of the first reel section. The generally flat proximal sections of the adjacent pairs of ears are located in engagement with each other and bias the abutment walls into surface engagement with each other. Each abutment wall also has a plurality of locking means or lips that hold the reel sections against reverse rotation, and thus hold the pairs of ears in engagement with each other. Holes in the abutment wall adjacent locking lips insure that the abutment walls are located in generally surface engagement with each other. The ears of each reel section comprise a pair of concentric rings of circumferentially spaced ears. The locking lip means comprise a ring of lips that project laterally from the abutment wall. Each lip is located adjacent to a hole in the abutment wall so that the lips of the adjacent reel sections can engage each other to prevent the reverse rotation and to prevent transverse movement of the reel sections relative to each other and thereby to hold the pairs of ears in engagement with each other. Each hub has a central boss provided with an opening for accommodating a support, such as a shaft, for a reel assembly. The hubs have annular wall means that provide a generally cylindrical body for accommodating the sheet material. Each hub has a selected lateral dimension so that the lateral dimension of the body can vary to accommodate different widths of sheet material. The interlocking ears and locking lips of the different sized hubs of the reel sections are interchangeable so that different sized reel assemblies can be made with a minimum number of reel sections. Six different sized reel assemblies can be made from combinations of three reel sections having different sized hubs. The use of three sizes of reel sections substantially reduces the amount of inventory necessary for the user to make up desired reel assemblies. The reel sections are nested together for storage and shipment. Reel sections having the selected hubs are snapped together at the location of utilization.

Drawings:

Figure 1 is a perspective view of a reel assembly of the invention:
Figure 2 is a side view of the reel assembly of Figure 1:
Figure 3 is an enlarged plan view of the reel assembly of Figure 1:

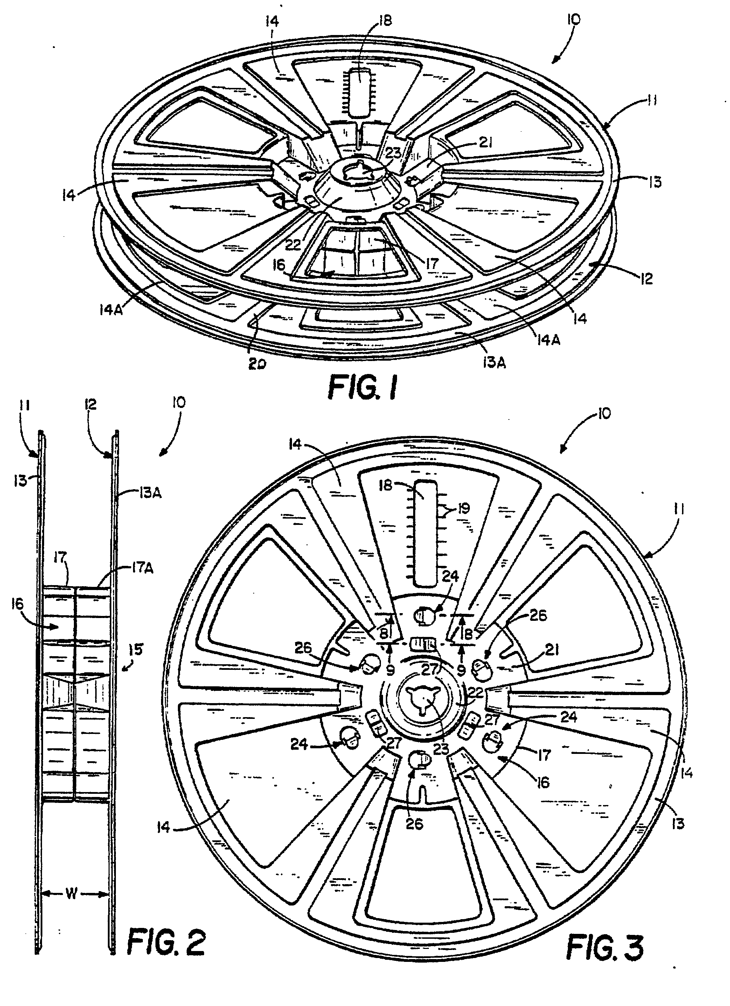

Figure 3 is an enlarged plan view of the reel assembly of Figure 1:

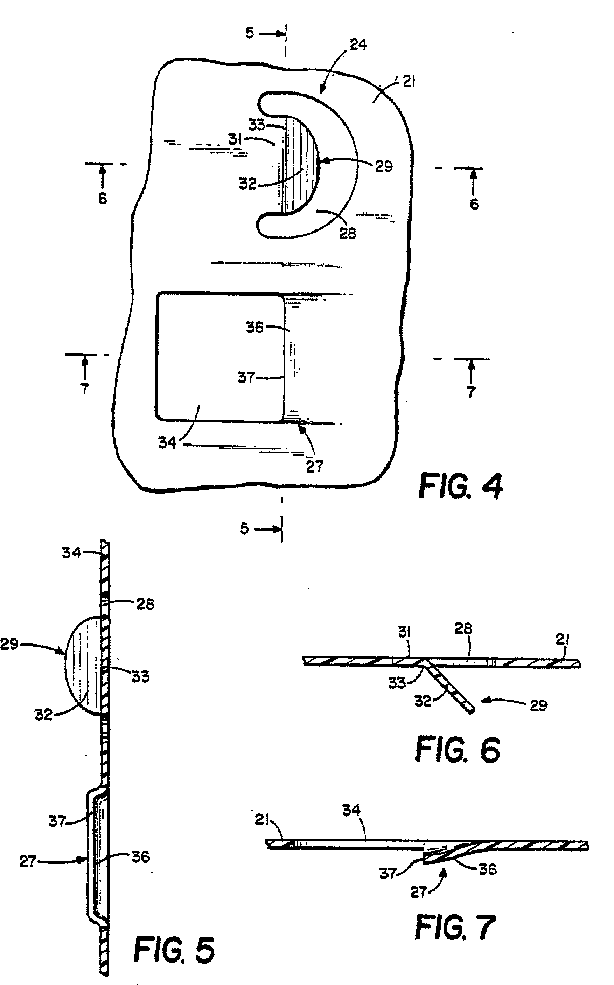

Figure 4 is an enlarged view of a portion of the hub of a reel section:
Figure 5 is a sectional view taken along the line 5-5 of Figure 4;
Figure 6 is a sectional view taken along the line 6-6 of Figure 4;
Figure 7 is a sectional view taken along the line 7-7 of Figure 4;

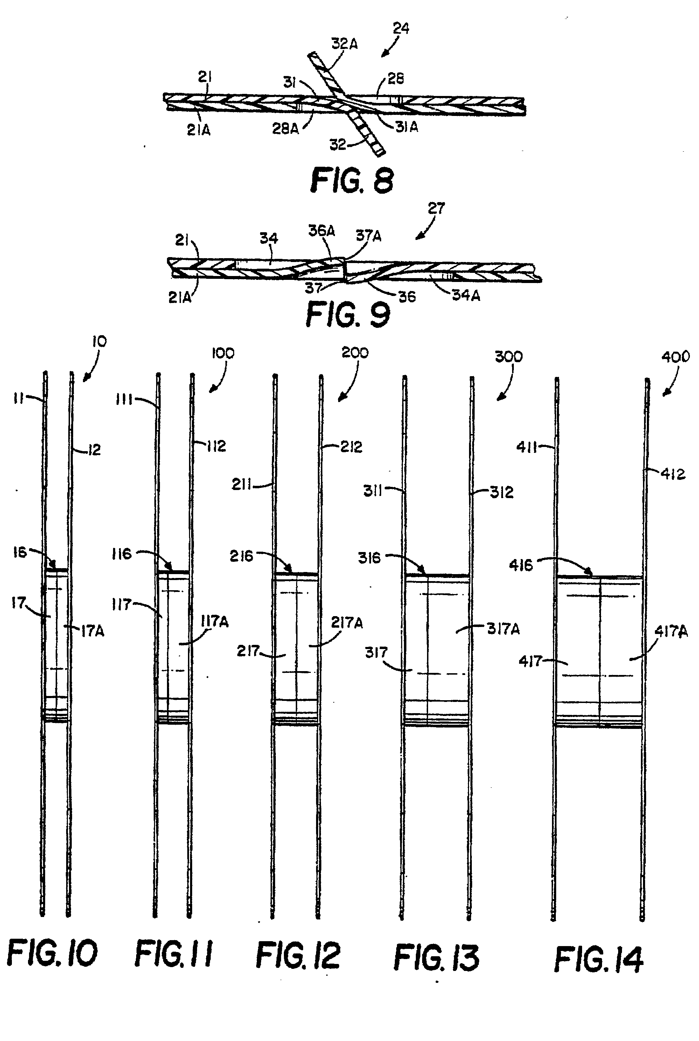

Figure 8 is an enlarged sectional view taken along the line 8-8 of Figure 3;
Figure 9 is an enlarged sectional view taken along the line 9-9 of Figure 3; and
Figures 10 to 14 are diagrammatic side views of the reel assembly of the invention showing five different sized reel assemblies made from reel sections having three different thicknesses of hub.

Description of Preferred Embodiment

Referring to Figures 1 to 3, there is shown a reel or spool assembly of the invention indicated generally at 10 for accommodating flexible sheet material, such as film, tape, and like elongated ribbons. The sheet material can be laminated sheets enclosing objects, such an electronic components. Reel assembly 10 comprises a pair of reel sections 11 and 12 that are interlocked together. Reel section 11 has a circular outer rim 13 joined to radially inwardly directed spokes 14. Spokes 14 are integral with a central cylindrical hub 16. Hub 16 has an outer arcuate wall 17 which forms part of a central body 15 of the reel 10. Spokes 14 are separate arcuate segments of a circle. Each spoke is a generally flat segment having a plurality of radial grooves and inwardly directed radial ribs 20. The ribs 20 are lateral spacers that extend in a radial direction outwardly from hub 16 to space the edge of the wound sheet material from side member 13. Wall 17 projects inwardly from the inner ends of spokes 14. Wall 17 comprises a plurality of convex wall sections. Adjacent convex wall sections are spaced from each other with recesses located about hub 16. One of spokes 14 has an elongated radial slot 18 to provide a visual indication as to the amount of sheet material that is carried on the reel assembly. A plurality of radially disposed indicator marks 19 on spoke 14 adjacent opposite sides of slot 19 provide this visual information as to the amount of sheet material on reel assembly 10.

Hub 16 has a generally flat base or abutment wall 21 joined to wall 17. Abutment wall 21 is generally parallel to side wall 13. The central portion of the abutment wall 21 has an outwardly directed cone-shaped boss 22. The centre of boss 22 has an opening 23 with radial recesses to accommodate a spindle, shaft, or a like support. The entire reel section 11 is a one-piece plastic member, and may conveniently be vacuum formed from thermoplastics sheet material.

Reel section 12 is identical to reel section 11. The parts of reel section 12 that correspond with parts of reel section 11 have the same reference numeral with the suffix A.

Hubs 16 and 16A have interlocking structures that hold the abutment walls 21 and 21A of the hub in firm surface or side-by-side engagement with each other and thereby form a complete reel assembly 10. The interlocking structures comprise an outer circle of interengaging ears 24 and an inner circle of interengaging ears 26. As shown in Figure 3, the outer circle of ears 24 comprises three pairs of circumferentially spaced interengaging ears. The inner circle also has three pairs of circumferentially spaced interengaging ears. Three locks 27 are located circumferentially between the ears 26 of the inner circle. Each of the interlocking ears is identical. Figure 4 shows ear 24 as being defined by a generally U-shaped slot 28 in the abutment wall 21. An ear or tab 29 extends into the slot 28. Each tab 29 has a geneally flat proximal section 31 leading to a semi-circular distal end section 32 along a bend line 33. Semi-circular section 32 has a radius of curvature that is smaller than the outer edge of the curved U-shaped slot 28 so that base proximal section 31 of the ear 29 can flex without fouling the abutment wall 21. As shown in Figure 6, the proximal section 31 is located generally in the same plane as the abutment wall 21. The semi-circular distal section 32 projects outwardly at an angle of about 45 degrees from the plane of base wall 21. Other angles of inclination of end section 32 can be used.

Each lock 27 is located adjacent a hole 34 in the abutment wall 21. Each lock 27 comprises an outwardly directed locking lip 36 one edge 37 of which forms an edge of the hole 34. That outer linear edge 37 of the lip 36 radially aligned with the base of the proximal section 31 of ear 29 as shown in Figure 4.

As shown in Figure 8, when interengaging ears 24 contact each other the abutment walls 21 and 21A are in surface engagement with each other. The proximal portions 31 and 31A of the ears are biased outwardly in opposite directions and hold the abutment walls 21 and 21A in engagement with each other. The outward flexing of the proximal portions 31 and 31A continuously biases the walls 21 and 21A into surface engagement with each other. The semi-circular outer end sections 32 and 32A function as interengaging ramps that guide the base sections 31 and 31A into interengaging relationship during the connections procedure of the reel sections.

Referring to Figure 9, the locks 27 prevent reverse or backward rotation of reel sections 11 and 12 thereby maintaining the interlocking ears 24 and 26 in holding relation with each other. The lips 36 and 36A of the interengaging locks project into holes 34A and 34 respectively so that middle portions of edges 37 and 37A are spaced from each other with opposite portions of the edges engaging with each other thereby preventing reverse rotation of reel sections 11 and 12 relative to each other.

Reel sections 11 and 12 can be coated with electrical anti-static coating material. This eliminates electrical discharge which could damage electrical components and collect dirt on the sheet material or tape. Small electrical components may adhere to the cover sheet of the tape due to electrostatic charge. This problem is eliminated with the use of an anti-static coating material applied to the reel section surfaces.

Reel sections 11 and 12 are made with hubs having three different sizes. Additional size variations can be made in the hubs and side members of the reel sections. The diameter of the outer rim 13 is preferably 18 cm or 33 cm. All of the hubs have common interlocking circles of ears 24 and 26 and locks 27. The axial length of the arcuate walls 17 of the reel sections has three different sizes, for example, 4mm, 8mm and 16mm. As shown in Figure 10, when reel sections 11 and 2 are interlocked to form cylindrical body 16, the width of hub walls 17 and 17A are combined to form the width of cylindrical body 16. In other words, as shown in Figure 2, the lateral distance W between side members 13 and 13A is the combined widths of the hubs of the reel sections. Figure 10 shows the width of each hub wall 17 and 17A as 4mm. The resultant body 16 has a width of 8mm.

Figure 11 shows reel 100 having reel sections 111 and 112 connected together to form the central body or hub 116.

Hub wall 117 has one half the width of the hub wall 117A. When hub wall 17A has a width of 4mm and hub wall 117A has a width of 8mm, the toal width of hub 116 is 12mm.

Referring to Figure 12, there is shown a reel 200 having reel sections 211 and 212 connected together forming the central body or hub 216. Hub 216 is formed by hub walls 217 and 217A. These walls 217 and 217A have a common width, for example, 8mm. The result is a central body having a width of 16mm.

Referring to Figure 13, there is shown a reel 300 having reel sections 311 and 312 joined together forming the central body or hub 316. Hub 316 comprises the hub walls 317 and 317A. Hub wall 317A is twice the width of hub wall 17. When hub wall 17 has a width of 8mm and hub wall 317A has a width of 16 mm, the total width of hub 316 is 24mm.

Figure 14 shows the reel 400 comprising reel sections 411 and 412 joined together forming the central body hub 416. Hub 416 comprises a wall 417 and 417A which have equal widths. When these widths are 16mm, the hub 416 has a width of 32mm.

The use of three reel sections having hubs of different width substantially reduces the amount of inventory necessary to provide a reel assembly having one of the five hub dimensions shown in Figures 10 to 14. There is an economy in manufacturing as only three different moulds are used to vacuum form the plastic reel sections. The reel sections are stacked together to minimize storage space and economize the shipment of the reel sections to a utilization location.

In use, reel sections having selected hub sizes are snapped together to form the reel assembly. This is achieved as follows. The inclined outer end sections 32 and 32A of each of the adjacent pairs of ears 24 and 26 are located adjacent each other. This also positions the locking lips 36 and 36A in close circumferential relation to each other. The reel sections 11 and 12 are then rotated relative to each other causing a face of each ear 24 and 26 to pass behind a corresponding face of the ear of the other reel section. Rotation continues until the adjacent lips 36 and 36A move into holes 34 and 34A and the outer ends of lip edges 37 and 37A contact each other. The ear sections 31 and 31A are forced into engagement with each other and function as leaf springs that bias the base walls 21 and 21A into engagement with each other. The lips 36 and 36A prevent reverse relative circumferential movement between the reel sections and prevent relative radial movement between the reel sections.

## Claims

1. A reel assembly for a ribbon of flexible sheet material comprising first and second reel sections (11,12) each having a hub comprising an abutment wall (21) which on assembly is retained in face-to-face contact with the abutment wall (21A) of the other reel section, characterised in that each abutment wall is provided with ear means (24,26) a face of which can be caused to pass behind a corresponding face of the ear means of the other abutment wall by relative rotational movement between the reel sections to hold the reel sections together, and each abutment wall is further provided with locking means (27) which interengage to prevent reverse rotational movement and disengagement of the reel sections.

2. A reel assembly according to claim 1, wherein the reel sections (11, 12) are formed by vacuum moulding from thermoplastics sheet material of uniform thickness.

3. A reel assembly according to claim 1 or claim 2, wherein each ear means (24, 26) comprises a proximal portion (31) in the plane of the abutment wall (21) and a distal portion (32) which is angled at an obtuse angle from the abutment wall so that on relative rotation of the reel sections the distal portions of cooperating ear means pass one behind the other optionally causing flexure of the proximal portions to hold the reel sections together in face-to-face contact.

4. A reel assembly according to claim 3, wherein the ear means (24, 26) are defined in the abutment walls (21) by generally U-shaped apertures formed in sheet material forming the abutment wall.

5. A reel assembly according to any preceding claim, wherein the ear means (24, 26) are provided in two concentric arrays about the axis of the reel.

6. A reel assembly according to any preceding claim, wherein each locking means (27) comprises a latching member on a resilient portion of the abutment wall (21), wherein relative rotational movement of the reel sections to move the latching members one over the other is accompanied by flexure of the abutment wall.

7. A reel assembly according to any preceding claim, wherein each locking means (27) comprises an outwardly formed lip portion (36) of the abutment wall (21), immediately adjacent an aperture (34); whereby on interengagement of the locking means of the cooperating reel sections (11, 12) the lip portions of each reel section move over the lip portions and into the apertures of the other reel section.

8. A reel assembly according to any preceding claim, wherein each reel section comprises a hub portions (16, 16A) providing the abutment wall (21) and a circular outer rim (13) connected to the hub portion by a plurality of spokes (14), the spokes and outer rim being axially spaced from the abutment wall (21).

9. A reel assembly according to any preceding claim, wherein the extent of the axial spacing between the spokes and axial rim and the abutment wall is selected from a possible range of three preselected spacings, but all other features of the two reel sections are mutually identical.

10. A reel assembly according to claim 8 or claim 9, wherein each spoke (14) comprises a radial groove on its outer surface and an inwardly directed radial rib (20) on its inner surface.

**Revendications**

1. Un montage de bobines pour un ruban d'étoffe de feuille souple comportant une première et une deuxième section de bobine (11, 12), chacune possédant un moyeu qui comporte une muraille d'arc-boutant (21) qui au montage est retenue en contact face à face avec la muraille d'arc-boutant (21A) de l'autre section de la bobine, caractérisé en tant que chaque muraille d'arc-boutant est munie de moyens acoustiques (24, 26) une face desquels peut se faire passer par derrière d'une face correspondante des moyens acoustiques de l'autre muraille d'arc-boutant par un mouvement rotatif relatif entre les sections de bobine afin de tenir ensemble les sections de bobine, et chaque muraille d'arc-boutant est munie davantage avec des moyens d'enrayage afin d'empêcher du mouvement rotatif en arrière et le dégagement des sections de bobine.

2. Un montage de bobines suivant la revendication 1, dans lequel les sections de bobine (11, 12) sont faits par moulage par le vide d'étoffe de feuille thermoplastique d'épaisseur uniforme.

3. Un montage de bobines suivant la revendication 1 ou la revendication 2 dans lequel chaque moyens acoustiques (24, 26) comporte une partie proximale (31) dans le plan de la muraille d'arc-boutant (21) et une partie distale (32) qui est anglée en angle obtus de la muraille d'arc-boutant en sorte qu'à rotation relative des sections de bobines les parties distales des moyens acoustiques coopérants passent l'une derrière l'autre facultativement et causent la flexure des parties proximales à tenir ensemble les sections des bobines en contact face à face.

4. Un montage de bobines suivant la revendication 3, dans lequel les moyens acoustiques (24, 26) sont définis dans les murailles d'arc-boutant (21) par des ouvertures en forme générale d'un U fait d'étoffe de feuille qui forme la muraille d'arc-boutant.

5. Un montage de bobines suivant toute revendication précédente, dans lequel les moyens acoustiques (24, 26) sont pourvus en deux rangs concentriques autour de l'axe de la bobine.

6. Un montage de bobines suivant toute revendication précédente, dans lequel chaque moyens d'enrayage (27) comporte un membre à loquet sur une partie élastique de la muraille d'arc-boutant (21), dans lequel le mouvement rotatif relatif des sections de bobine à déplacer les membres à loquet l'un sur l'autre est accompagné par une flexure de la muraille d'arc-boutant.

7. Un montage de bobines suivant toute revendication précédente, dans lequel chaque moyens d'enrayage (27) comporte une partie saillante (36) formée à l'extérieur de la muraille d'arc-boutant (21), immédiatement contiguë à une ouverture (34); par laquelle à l'interengagement des moyens d'enrayage des sections de bobine coopérantes (11, 12) les parties saillantes de chaque section de bobine passent sur les parties saillantes et dans les ouvertures de l'autre section de bobine.

8. Un montage de bobines suivant toute revendication précédente, dans lequel chaque section de bobine comporte une partie moyeu (16, 16A) fournissant la muraille d'arc-boutant (21) et une jante extérieure circulaire (13) reliée à la partie moyeu par une pluralité de rais (14), les rais et la jante extérieure étant axialement écartés de la muraille d'arc-boutant (21).

9. Un montage de bobines suivant toute revendication précédente, dans lequel l'étendue de l'écartement axial entre les rais et jante axiale et la muraille d'arc-boutant est sélectionnée d'une série de trois écartements présélectionnés, mais tous les autre traits des deux sections de bobine sont réciproquement identiques.

10. Un montage de bobines suivant la revendication 8 ou la revendication 9, dans lequel chaque rai (14) comporte un creux radial sur sa surface extérieure et une strie radiale intérieurement orientée (20) sur sa surface intérieure.

## Patentansprüche

1. Eine Rolleneinrichtung für eine Bahn von flexiblem Folienmaterial bestehend aus einem ersten und einem zweiten Rollenabschnitt (11, 12) jeweils mit einer Nabe, die ein Widerlager (21) umfasst, das nach dem Zusammenbau in Flächenberührung mit dem Widerlager (21A) des anderen Rollenabschnittes gehalten wird, dadurch gekennzeichnet, dass jedes Widerlager mit Öhrmitteln (24, 26) ausgerüstet ist, wovon eine Fläche hinter die entsprechende Fläche des Öhrmittels des anderen Widerlagers durch relative Rotationsbewegung zwischen den Rollenabschnitten bewegt werden kann, um die Rollenabschnitte zusammenzuhalten, und dass jedes Widerlager ausserdem mit Sperrmitteln (27) ausgerüstet ist, die ineinander eingreifen, um die entgegengesetzte Rotationsbewegung und die Auskuppelung der Rollenabschnitte zu verhindern.

2. Eine Rolleneinrichtung nach Anspruch 1, in der die Rollenabschnitte (11, 12) durch Vakuumformen von Thermoplastfolienmaterial einer einheitlichen Stärke geformt sind.

3. Eine Rolleneinrichtung nach Anspruch 1 oder 2, in der jedes Öhrmittel (24, 26) ein proximales Teil (31) in der Ebene des Widerlager (21) und ein distales Teil (32) umfasst, welches unter einem stumpfen Winkel zum Widerlager abgewinkelt ist, so, dass bei der relativen Rotation der Rollenabschnitte eines der distalen Teile der zusammenwirkenden Öhrmittel sich hinter das andere bewegt so, dass sie die Biegung der proximalen Teile so bewirken, dass die Rollenabschnitte in Flächenberührung zusammen gehalten werden.

4. Eine Rolleneinrichtung nach Anspruch 3, in der die Öhrmittel (24, 26) in den Widerlagern (21) durch generell U-förmige, im die Widerlager bildenden Folienmaterial gebildete Öffnungen definiert werden.

5. Eine Rolleneinrichtung nach irgend einem der vorangehenden Ansprüche, in der die Öhrmittel (24, 26) in zwei konzentrischen Reihen um die Rollenachse angeordnet sind.

6. Eine Rolleneinrichtung nach irgend einem der vorangehenden Ansprüche, in der jedes Sperrmittel (27) über ein Klinkenelement in einem elastischen Teil des Widerlagers (21) verfügt, bei dem die relative Rotationsbewegung der Rollenabschnitte zur Verschiebung der Klinkenelemente übereinander durch die Biegung des Widerlagers begleitet wird.

7. Eine Rolleneinrichtung nach irgend einem der vorangehenden Ansprüche, in der jedes Sperrmittel (27) über ein nach aussen geformtes Lippenteil (36) des Widerlagers (21) unmittelbar neben einer Öffnung verfügt; dabei bewegen sich die Lippenteile jedes Rollenabschnittes beim Ineinandergreifen der Sperrmittel der zusammenwirkenden Rollenabschnitte (11, 12) über die Lippenteile und die Öffnungen des anderen Rollenabschnittes.

8. Eine Rolleneinrichtung nach irgend einem der vorangehenden Ansprüche, in der jeder Rollenabschnitt über Nabenteile (16, 16A), die das Widerlager (21) ausbilden, sowie eine kreisförmige äussere Felge (13) verfügt, die mit dem Nabenteil über mehrfache Speichen (14) verbunden ist, wobei die Speichen und die äussere Felge axial mit Zwischenraum von dem Widerlager (21) entfernt angeordnet sind.

9. Eine Rolleneinrichtung nach irgend einem der vorangehenden Ansprüche, in der die Grösse des axialen Zwischenraums zwischen den Speichen und der äusseren Felge einerseits und dem Widerlager andererseits aus einem möglichen Bereich von drei vorgewählten Abständen bestimmt wird, in der aber alle anderen Merkmale der beiden Rollenabschnitte untereinander identisch sind.

10. Eine Rolleneinrichtung nach Anspruch 8 oder 9, in der jede Speiche (14) über eine radiale Nut an der Aussenfläche und eine nach innen gerichtete Radialrippe (20) an der Innenfläche verfügt.

FIG. I

FIG. 2

FIG. 3

FIG. 4

FIG. 5

FIG. 6

FIG. 7

FIG. 8

FIG. 9

FIG. 10    FIG. 11    FIG. 12    FIG. 13    FIG. 14